# EUROPEAN PATENT SPECIFICATION

(11) **EP 1 277 977 B1**
(45) Date of publication and mention of the grant of the patent: **09.08.2006**
(21) Application number: 02100569.9
(22) Date of filing: 28.05.2002
(51) Int. Cl.: F16C 33/66

(54) **Rotational device**
Umdrehungsvorrichtung
Dispositif tournant

(30) Priority: 19.07.2001 JP 2001220065
(43) Date of publication of application: 22.01.2003
(73) Proprietor: IMN Co., Ltd, Takefu-shi, 915-0861 (JP)
(72) Inventor: Matsuura, Yasumaro, Takefu-shi, 915-0861 (JP); Yamada, Kikuta, Takefu-shi, 915-0861 (JP); Tanaka, Seiji, Takefu-shi, 915-0861 (JP)
(74) Representative: Brunner, Michael John

(56) References cited:
- EP-A- 0 439 626
- EP-A- 0 458 499
- WO-A-01/55634
- US-A- 5 381 874
- US-A- 5 749 660
- US-A- 6 105 724

## Description

This invention relates to a structure in a rotational device with an improved supply method for a lubricant, such as grease.

Generally, in a rotational device, one of either an inner part or an outer part is fixed and the other one is rotated, and a rotational bearing that may have a roller that lies between the inner and outer parts.

Various methods for lubricating a rotational bearing, such as grease lubrication, oil mist lubrication, and jet lubrication, are known. Grease lubrication is lower in the conformability to a high angular velocity than the other lubricating methods, but is characterized by inexpensive raw materials, by low heat generation, and by having only a slight influence on the surrounding environment. Therefore, in recent years, there has been a re-evaluation of the use of grease lubrication.

Usually, in grease lubrication, the time between one lubrication of a rotational bearing and the bearing subsequently requiring further lubrication depends on a so-called "Dmn value" (Diameter of medium & number of rotations), i.e., (average diameter of a rotational bearing in mm) x (angular velocity in rpm). For example, in a bearing that uses cylindrical roller elements, empirically it is known that the time between one lubrication of a rotational bearing and the bearing subsequently requiring lubrication is about 20,000 hours if the Dmn value is about 600,000, and is about 5000 hours if the Dmn value is 1,000,000, on the assumption that the rotational bearing is continuously rotated.

This empirical fact means that the period within which lubrication must be carried out on the rotational bearing is shortened as the circumferential speed of the roller increases. However, conventionally, lubricant supply has been carried out on the basis of sense and experience in the field, and rules/notions about regular lubricant supply according to a fixed standard have not so far been advanced.

For this reason, not a few cases occur in which the bearing does not receive lubrication when it is required and, as a result, fatigue of the bearing or breakage in the rotational device sometimes occurs.

The present invention results from a consideration of the above-mentioned circumstances of the conventional technique and aims to provide a structure of a rotational device capable of regularly supplying a lubricant as it is required by the rotational device.

According to the present invention there is provided a rotational device comprising: an inner part and an outer part, one of which is rotatable relative to the other; one or more main rotational bearings disposed between the inner part and the outer part; a lubricant supply controller containing a memory which stores the number of revolutions made by the or each bearing and a predetermined number of revolutions required between sequential lubrications for the or each rotational bearing, and providing a signal to initiate lubrication of a bearing when the number of revolutions made after a lubrication and stored in the memory reaches the predetermined number of revolutions for that bearing.

Preferably, the lubricant is automatically supplied on the basis of the lubrication signal issued by the controller.

Preferably, the memory updates the predetermined number of revolutions if the time actually required between lubrications is less than that suggested by the predetermined number of revolutions stored in the memory.

One memory may be provided for a plurality of rotational devices, and the rotational values of plural rotational bearings may be stored in the memory.

Preferably, the inner part and the outer part each have complementary oil track grooves for receiving the lubricant.

The oil track grooves may have a cross-sectional configuration that is either substantially rectangular, triangular, arcuate or circular.

Preferably, the inner and outer parts have bearing grooves for receiving the bearing therein, and the oil track grooves are positioned offset from positions where the bearing contacts the bearing grooves of the inner and outer parts.

The device may further comprise a lubricant supply bore in at least one of said inner part and outer part for supplying said lubricant to said bearing.

The bearing may be a spherical ball.

One memory may be provided for a plurality of rotational devices, and Dmn values of plural rotational bearings may be stored in the memory.

Examples of the present invention will now be described with reference to the accompanying drawings, in which:
Fig. 1(a) is a side sectional view of a rotational bearing, a lubricant supply pump, and a block diagram of a controller for showing the basic structure of a rotational system, in which a rotor is disposed inside a stator;
Fig. 1(b) is a side sectional view of a rotational bearing, a lubricant supply pump, and a block diagram of a controller for showing the basic structure of a rotational system, in which a rotor is disposed outside a stator;
Fig. 2 is a flowchart for explaining the working principle of the present invention;
Fig. 3 is a side view showing a track oil groove formed in an outer rotational ring;
Fig. 4 is a side view showing a track oil groove formed in an inner fixed ring;
Fig. 5 shows various types of sectional shapes of the track oil groove;
Fig. 6 is a sectional view for explaining a state of an inner rotational ring, an outer rotational ring, and a track oil groove in each rotational ring when a spherical roller is used;
Fig. 7 is a sectional view for explaining a state of the inner rotational ring, the outer rotational ring, and the track oil groove in each rotational ring when a spherical roller is used; and,
Fig. 8 is a sectional view for explaining a state of the inner rotational ring, the outer rotational ring, and the track oil groove in each rotational ring when a spherical roller is used.

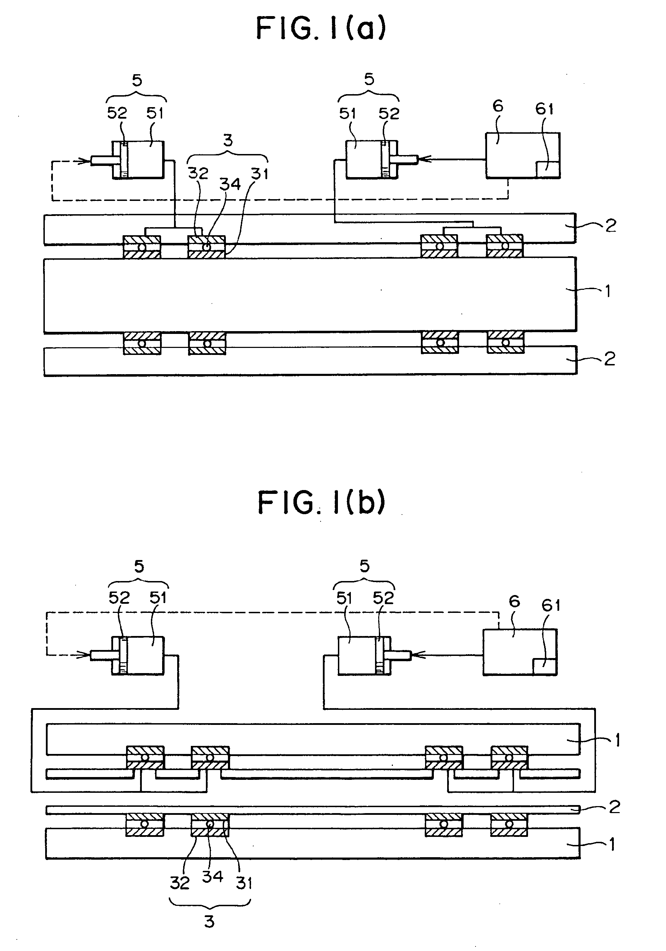

As shown in Fig. 1(a), in the case where a rotational device includes a stator 2 as an outer part and a rotor 1 as an inner part and in Fig.1(b), in the case where a rotational device includes the rotor 1 as the outer part and the stator 2 as the inner part, the rotational device is constructed with a rotational bearing 3 between the inner and outer parts (rotor and stator).

As described above, the time required between subsequent lubrications according to each lubrication method depends on Dmn values that reflect the rotational speed of the bearing 3, and the time required between subsequent lubrications corresponding to each Dmn value is roughly known by past experience or statistics.

The time required between lubrications that corresponds to each Dmn value is based on the fact that the rotational device is continuously used. However, in practice, the rotational device is not continuously used, and the period within which a lubricant should be supplied depends on the frequency of use of the rotational device.

If the rotational speed is constant, the Dmn value of the rotational device and the time between subsequent lubrications are inversely proportional.

Therefore, from the relationship between the Dmn value and the time required between subsequent lubrications, the larger the Dmn value is, the smaller is the rotational speed that causes lubrication not to occur within the required time.

The present invention that has been made in realisation of these circumstances. A numerical value below a Dmn-based value based on statistical data about the time required between subsequent lubrications of a lubricant is predetermined in accordance with each type of rotational device classified by various Dmn values based on an average diameter (i.e., the sum average of outer and inner diameters) of the rotational bearing 3, rotational speed, etc. The predetermined numerical value is stored in a memory 61 disposed in the lubricant supply controller 6 and, when the number of revolutions made by the rotational device reaches the predetermined value, a signal to supply a lubricant is issued.

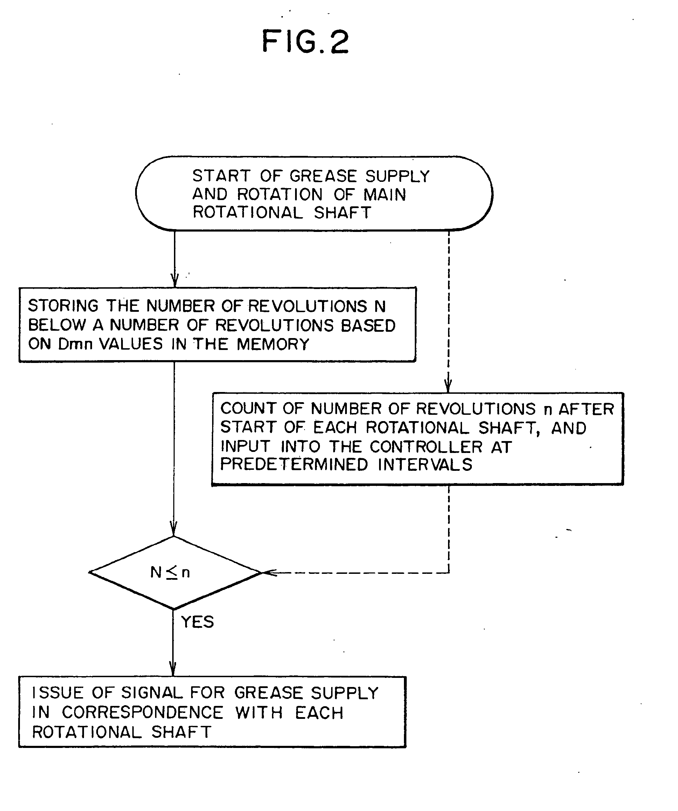

This control process can be expressed by the flowchart of Fig. 2.

Usually, a microcomputer or a dedicated digital counter circuit can transmit the signal based on the set value stored in the memory 61. When this signal is issued, a piston 52 of a lubrication pump 5 is operated manually or automatically, thus supplying the lubricant to the rotational bearing 3, as shown in (a) and (b) of Fig. 1.

However, in order, in accordance with the teachings of the present invention to regularly supply a lubricant, it is preferable to supply lubricant automatically to the rotational shaft on the basis of the above-mentioned signal.

Like the rotational bearing 3 usually used, a rotational bearing of the present invention has a structure in which an oil track groove 4 is formed both in a rotational ring 31 and in a fixed ring 32, and lubricant supplied from the lubrication pump 5 along the oil groove 4 is provided to and brought into contact with the rotational surface of the ball 34 or the cylindrical roller 33 of the ball bearing, thus performing a lubricating action on rotation.

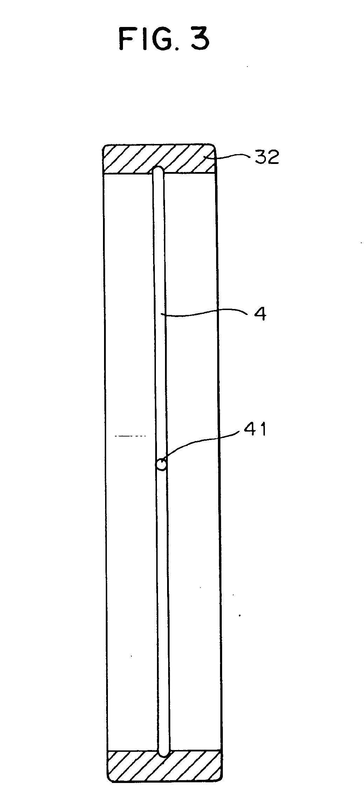

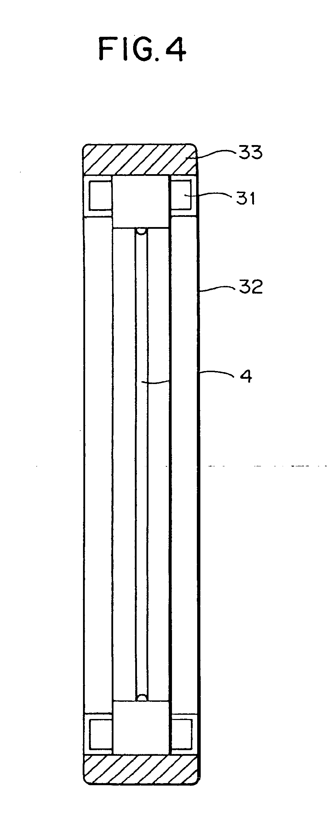

Fig. 3 shows an oil track groove 4 of, for example, a fixed ring 32 integral with the fixed outer part and Fig. 4 shows a rotational ring 31 integral with the rotating inner part. The oil groove 4 is formed at the circumference of the fixed ring 32 and on the interior circumference of the rotational ring 31.

However, the track shape of the oil groove 4 is not limited to a linear one along the circumference as shown in Fig. 3 and Fig. 4, and can be designed to have various shapes, such as a spiral, screw, or cross made by the intersection of two slanted/straight lines.

Even if the relationship between the inner and outer parts of the rotational ring 31 and fixed rings 32 is reversed from the design shown in Fig. 3 and Fig. 4, there is no change in that the oil groove 4 is formed in the circumferences of each fixed ring and each rotational ring.

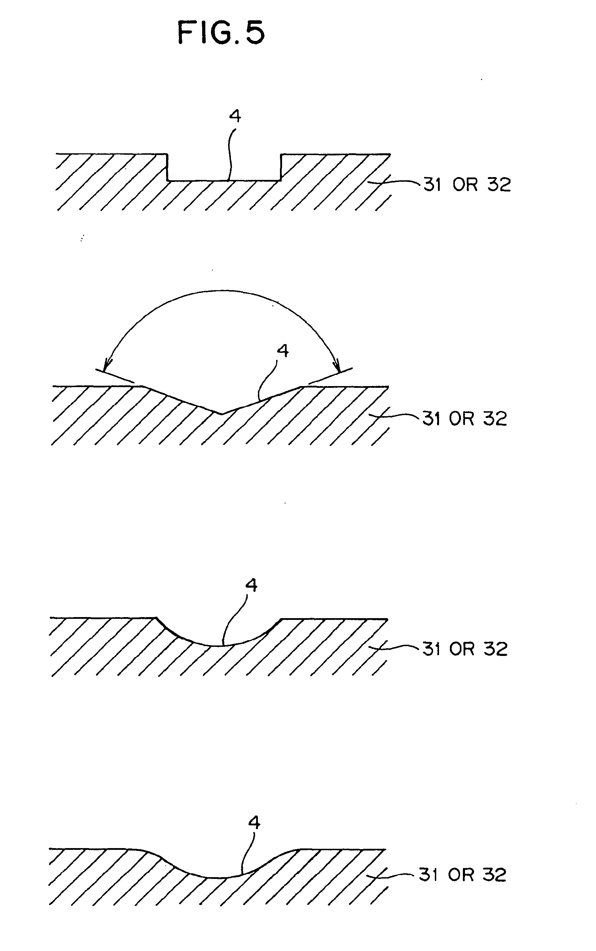

As shown in Fig. 5, the cross-sectional shape of the oil groove 4 can be formed to be substantially rectangular, substantially triangular, substantially arcuate, or a doubly arcuate shape in which an arcuate shape whose rotational centre is the inner part at both sides is combined with an arcuate shape whose rotational centre is the outer part therebetween. Accordingly, the cross-sectional shape is not limited to a specific shape.

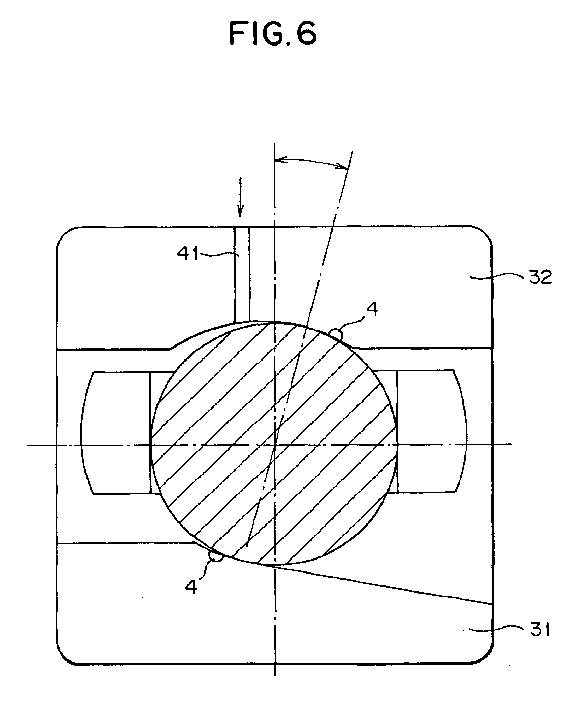

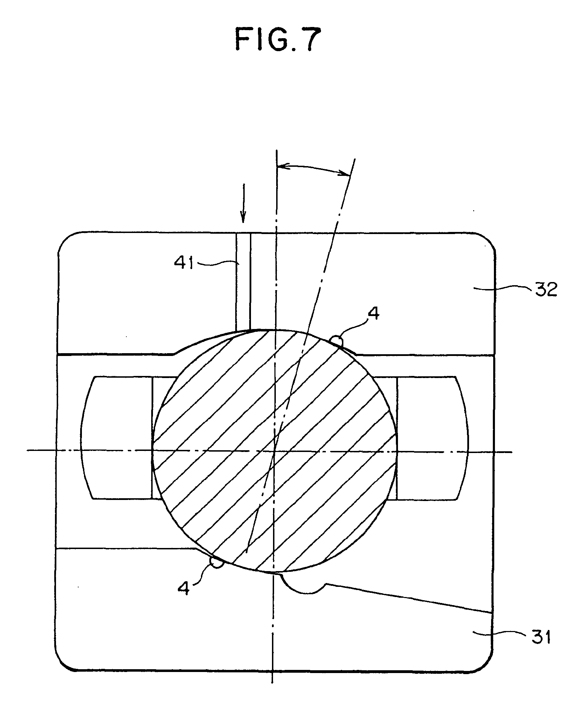

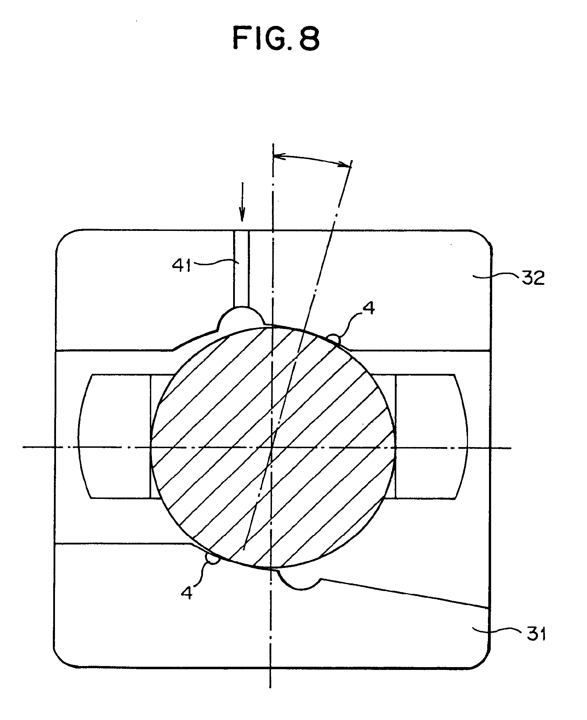

Fig. 6, Fig. 7, and Fig. 8 show different views of a rotational ring 31 integral with a fixed ring 32, and each oil track groove 4 in a case where a spherical roller 34 is especially used as a roller. In the spherical roller 34 of the ball bearing, it is advisable to dispose the track oil groove 4 at a place other than the part where the spherical roller 34, the rotational ring 31, and the fixed ring 32 are rotated while contacting each other.

Even if the inner and outer positions of the rotational ring 31 and the fixed ring 32 are reversed from the design shown in Fig.6, Fig.7, and Fig.8, there is no change in that it is advisable to dispose the track oil groove 4 at a place other than the part where the spherical roller 34 is rotated while contacting with the outer rotational ring 31 and the inner fixed ring 32.

Various embodiments of the present invention are hereinafter described.

A number based on the Dmn value is stored in the memory 61 that is below the Dmn value of each type of rotational device, and a signal to supply a lubricant is issued. Thereby, in most cases, the lubricant can be supplied to the rotational bearing 3 before lubrication of the bearing is necessary.

However, exceptionally, the rotational lifetime corresponding to the Dmn value is inappropriate for the rotational bearing 3 that is actually working, and the time actually required between lubrications of the rotational bearing 3 is passed before the predetermined value stored in the memory 61 of the lubricant supply controller 6 is reached.

In a first embodiment 1 a numerical value below the predetermined Dmn-related value corresponding to a rotation lifetime that has been newly calculated by actual use is stored in the memory 61 replacing the Dmn-related value based on past values, and a signal indicating that a lubricant should be newly supplied is issued on the basis of this new number.

By newly setting the number of revolutions in this way, it is possible to carry out more reliably the lubricant supply before lubrication of the rotational bearing 3 becomes necessary such that theoretical and practical values converge.

Fig. 1 shows an example in which an NC controller 6, including a memory 61 that stores a set number of revolutions, is provided for each individual main rotational shaft.

Of course it is possible to set up an NC controller corresponding to a single rotational device.

In Figure 1, it is possible to store different predetermined numbers of revolutions one of which corresponds to the ball 34 of the ball bearing at the front position of the rotational device and the other one corresponds to the cylindrical roller 33 at the back of the rotational device, and the controller can thereafter issue corresponding signal for each.

However, the controller 6 including the memory 61 is not necessarily required to be disposed on the rotational device. For example, it is fully possible to store predetermined numbers of revolutions that correspond to each rotational bearing 3 of the rotational device in a memory 61 with respect to a plurality of rotational devices, in a factory and to issue signals indicating that a lubricant should be individually supplied to each rotational bearing 3. Thus a second embodiment has one memory 61 provided for a plurality of rotational devices in this way. This structure makes it possible to realize efficient design and control.

In the present invention constructed as above, a lubricant can be sequentially supplied without waiting for lubrication of the rotational bearing to become necessary. As a result, an accident due to the wear of a rotational bearing can be prevented, and the rotational bearing can be safely operated for a long time.

Especially, when the lubricant is automatically supplied in response to a signal, safe operations can be carried out without performing special actions, as described above. This is extremely convenient.

Thus, the present invention is versatile and advantageous in operation.

## Claims

1. A rotational device comprising:
an inner part (1) and an outer part (2), one of which is rotatable relative to the other;
one or more main rotational bearings (3) disposed between the inner part (1) and the outer part (2);
a lubricant supply controller (6) containing a memory (61) which stores the number of revolutions made by the or each bearing and a predetermined number of revolutions required between sequential lubrications for the or each rotational bearing (3), and providing a signal to initiate lubrication of a bearing when the number of revolutions made after a lubrication and stored in the memory (61) reaches the predetermined number of revolutions for that bearing.

2. The rotational device of Claim 1, wherein the lubricant is automatically supplied on the basis of the lubrication signal issued by the controller (6).

3. The rotational device of claim 1, wherein the memory (61) updates the predetermined number of revolutions if the time actually required between lubrications is less than that suggested by the predetermined number of revolutions stored in the memory (61).

4. The rotational device of Claim 1, wherein one memory (61) is provided for a plurality of rotational devices, and the rotational values of plural rotational bearings (3) are stored in the memory (61).

5. The rotational device according to claim 1, wherein the inner part (1) and the outer part (2) each have complementary oil track grooves (4) for receiving the lubricant.

6. The rotational device according to claim 5, wherein the oil track grooves (4) have a cross-sectional configuration that is either substantially rectangular, triangular or arcuate.

7. The rotational device according to claim 1, wherein the oil track grooves (4) have a circular configuration.

8. The rotational device according to claim 1, where the inner and outer parts (1,2) have bearing grooves for receiving the bearing therein, and the oil track grooves (4) are positioned offset from positions where the bearing contacts the bearing grooves of the inner and outer parts (1,2).

9. The rotational device according to claim 8, further comprising a lubricant supply bore in at least one of said inner part (1) and outer part (2) for supplying said lubricant to said bearing (3).

10. The rotational device according to claim 1, wherein the bearing (3) is a spherical ball (34).

## Patentansprüche

1. Umdrehungsvorrichtung, umfassend:
einen inneren Teil (1) und einen äußeren Teil (2), von denen einer relativ zu dem anderen drehbar ist;
ein oder mehrere Hauptrotationslager (3), die zwischen dem inneren Teil (1) und dem äußeren Teil (2) angeordnet sind;
eine Steuerung (6) für die Schmiermittelzufuhr, die einen Speicher (61) beinhaltet, der die Anzahl an Umdrehungen speichert, die von dem oder jedem Lager durchgeführt werden und eine vorbestimmte Anzahl an Umdrehungen, die erforderlich ist zwischen aufeinanderfolgenden Schmierungen des oder jedes Rotationslagers (3) und ein Signal liefert, das die Schmierung eines Lagers einleitet, wenn die Anzahl an Umdrehungen, die nach einer Schmierung durchgeführt und in dem Speicher (61) gespeichert wurden, die vorbestimmte Anzahl an Umdrehungen für das Lager erreicht hat.

2. Umdrehungsvorrichtung nach Anspruch 1, bei welcher das Schmiermittel automatisch basierend auf dem von der Steuerung (6) abgegebenen Schmiersignal zugeführt wird.

3. Umdrehungsvorrichtung nach Anspruch 1, bei welcher der Speicher (61) die vorbestimmte Anzahl an Umdrehungen aktualisiert, falls die tatsächlich erforderliche Zeit zwischen Schmierungen kürzer ist als diejenige, die vorgeschlagen wird durch die in dem Speicher (61) gespeicherte vorbestimmte Anzahl an Umdrehungen.

4. Umdrehungsvorrichtung nach Anspruch 1, bei welcher ein Speicher (61) für mehrere Umdrehungsvorrichtungen vorgesehen ist und die Rotationswerte mehrerer Rotationslager (3) in dem Speicher (61) gespeichert sind.

5. Umdrehungsvorrichtung nach Anspruch 1, bei welcher der innere Teil (1) und der äußere Teil (2) jeweils komplementäre Ölführungsrillen (4) zur Aufnahme des Schmiermittels haben.

6. Umdrehungsvorrichtung nach Anspruch 5, bei welcher die Ölführungsrillen (4) eine Querschnittsausgestaltung haben, die entweder im wesentlichen rechteckig, dreieckig oder gekrümmt ist.

7. Umdrehungsvorrichtung nach Anspruch 1, bei welcher die Ölführungsrillen (4) eine kreisförmige Ausgestaltung haben.

8. Umdrehungsvorrichtung nach Anspruch 1, bei welcher die inneren und äußeren Teile (1, 2) Lageraussparungen haben, um darin das Lager aufzunehmen und die Ölführungsrillen (4) versetzt zu Positionen angeordnet sind, wo das Lager die Lageraussparungen der inneren und äußeren Teile (1, 2) kontaktiert.

9. Umdrehungsvorrichtung nach Anspruch 8, des weiteren umfassend eine Bohrung zum Zuführen von Schmiermittel in dem inneren Teil (1) und/oder dem äußeren Teil (2), um das Schmiermittel dem Lager (3) zuzuführen.

10. Umdrehungsvorrichtung nach Anspruch 1, bei welcher das Lager (3) eine sphärische Kugel (34) ist.

## Revendications

1. Dispositif tournant comprenant :
une partie intérieure (1) et une partie extérieure (2), dont l'une peut être mise en rotation par rapport à l'autre ;
un ou plusieurs paliers rotatifs principaux (3) disposés entre la partie intérieure (1) et la partie extérieure (2) ;
un dispositif de commande d'alimentation en lubrifiant (6) contenant une mémoire (61) qui enregistre le nombre de tours effectués par le ou par chaque palier rotatif et un nombre de tours prédéterminé nécessaire entre les lubrifications ultérieures pour le ou pour chaque palier rotatif (3), et émettant un signal destiné à amorcer la lubrification d'un palier lorsque le nombre de tours effectués après une lubrification et enregistré dans la mémoire (61) atteint le nombre de tours prédéterminé pour ce palier.

2. Dispositif tournant selon la revendication 1, dans lequel le lubrifiant est fourni automatiquement sur la base du signal de lubrification émis par le dispositif de commande (6).

3. Dispositif tournant selon la revendication 1, dans lequel la mémoire (61) actualise le nombre de tours prédéterminé si le temps réellement nécessaire entre les lubrifications est inférieur au temps suggéré par le nombre de tours prédéterminé enregistré dans la mémoire (61).

4. Dispositif tournant selon la revendication 1, dans lequel une seule mémoire (61) est prévue pour plusieurs dispositifs tournants, et les valeurs de rotation de la pluralité de paliers rotatifs (3) sont enregistrées dans la mémoire (61).

5. Dispositif tournant selon la revendication 1, dans lequel la partie intérieure (1) et la partie extérieure (2) comportent chacune des rainures de graissage (4) complémentaires destinées à recevoir le lubrifiant.

6. Dispositif tournant selon la revendication 5, dans lequel les rainures de graissage (4) présentent une configuration en coupe transversale qui est sensiblement rectangulaire, triangulaire ou arquée.

7. Dispositif tournant selon la revendication 1, dans lequel les rainures de graissage (4) présentent une configuration circulaire.

8. Dispositif tournant selon la revendication 1, dans lequel la partie intérieure et la partie extérieure (1, 2) comportent des rainures à roulement destinées à recevoir le palier, et les rainures de graissage (4) sont positionnées en étant décalées par rapport aux positions dans lesquelles le palier vient en contact avec les rainures à roulement de la partie intérieure et de la partie extérieure (1, 2).

9. Dispositif tournant selon la revendication 8, comprenant en outre un alésage d'alimentation en lubrifiant dans au moins l'une desdites partie intérieure (1) et partie extérieure (2) destiné à alimenter ledit palier (3) en dit lubrifiant.

10. Dispositif tournant selon la revendication 1, dans lequel le palier (3) est une bille sphérique (34).
